(19) Europäisches Patentamt / European Patent Office / Office européen des brevets

(11) **EP 4 106 050 A1**

(12) **EUROPEAN PATENT APPLICATION**
published in accordance with Art. 153(4) EPC

(43) Date of publication:
**21.12.2022 Bulletin 2022/51**

(21) Application number: **22759990.9**

(22) Date of filing: **21.02.2022**

(51) International Patent Classification (IPC):
$H01M\ 4/133$ (2010.01)    $H01M\ 4/04$ (2006.01)
$H01M\ 4/1393$ (2010.01)    $H01M\ 10/0525$ (2010.01)
$H01M\ 4/62$ (2006.01)    $H01M\ 4/02$ (2006.01)

(52) Cooperative Patent Classification (CPC):
H01M 4/02; H01M 4/04; H01M 4/133;
H01M 4/1393; H01M 4/62; H01M 10/0525;
Y02E 60/10; Y02P 70/50

(86) International application number:
**PCT/KR2022/002474**

(87) International publication number:
**WO 2022/182072 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 KR 20210026804**

(71) Applicant: **LG Chem, Ltd.**
**Seoul 07336 (KR)**

(72) Inventors:
• **CHOI, Hyunwoo**
**Daejeon 34122 (KR)**

• **OH, Sung Joon**
**Daejeon 34122 (KR)**
• **KIM, Youngsuk**
**Daejeon 34122 (KR)**
• **LEE, Jeongkyu**
**Daejeon 34122 (KR)**
• **SONG, Inyoung**
**Daejeon 34122 (KR)**
• **CHOE, Yeonji**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ANODE FOR SECONDARY BATTERY, PREPARATION METHOD THEREFOR, AND LITHIUM SECONDARY BATTERY COMPRISING SAME**

(57) The present disclosure relates to a negative electrode for a secondary battery that is improved in the peeling resistance and adhesiveness of the active material layer and thus can improve the life characteristics of the negative electrode and the lithium secondary battery, a method of manufacturing the same and a lithium secondary battery including same. The negative electrode for a secondary battery includes a metal current collector; and an active material layer formed on the metal current collector and containing a negative electrode active material, a binder, and a conductive material, wherein the active material layer has an average value of shear strength of 1.6 MPa or more as measured at a predetermined depth.

【FIG. 2】

EP 4 106 050 A1

**Description**

**[TECHNICAL FIELD]**

CROSS-REFERENCE TO RELATED APPLICATION(S)

This application claims the benefit of Korean Patent Application No. 10-2021-0026804 filed on February 26, 2021with the Korean Intellectual Property Office, the contents of which are incorporated herein by reference in its entirety.

The present disclosure relates to a negative electrode for a secondary battery that is improved in the peeling resistance and adhesiveness of the active material layer and thus can improve the life characteristics of the negative electrode and the lithium secondary battery, a method of manufacturing the same and a lithium secondary battery including same.

**[BACKGROUND]**

Along with the increase of the technological development and demand for mobile devices, electric vehicles and the like, the demand for secondary batteries has also sharply increased as an energy source. Among such secondary batteries, a lithium secondary battery that exhibits high energy density and voltage, has a long cycle life and a low discharge rate is now commercialized and widely used.

Generally, lithium secondary batteries have a structure in which an electrolyte containing lithium salt is impregnated into an electrode assembly in which a porous separator is interposed between a positive electrode and a negative electrode, each of which is coated with an active material on a metal current collector, and each of the electrodes is manufactured by applying onto a metal current collector a slurry composition in which an active material, a binder, and a conductive material are dispersed in a solvent, pressing and drying the applied slurry composition.

Therefore, the life characteristics of the lithium secondary battery can be mainly determined depending on how long the electrochemical characteristics of the electrode, especially the active material layer, are maintained. However, in the case of an existing lithium secondary battery, as the period of use elapses, the active material layer is peeled off from the metal current collector in the negative electrode, and the life characteristics of the lithium secondary battery are deteriorated frequently.

This seems to be because the active material layer of the negative electrode contains, as a main component, a graphite-based negative electrode active material having properties different from those of metals, so that it is difficult to ensure sufficient adhesiveness, close adhesion, and peeling resistance to the metal current collector. Due to such poor close adhesion of the active material layer of the negative electrode, there is a drawback that the active material layer is easily peeled off from the metal current collector after the lapse of the usage period of the lithium secondary battery, and the peeled active material layer can no longer function as an active region of the lithium secondary battery, which causes a problem that the charge/discharge cycle characteristics of the lithium secondary battery are rapidly deteriorated.

Due to these problems, there is still a need for continuous development of a technique capable of further improving the adhesivenessor the like of the active material layer contained in the negative electrode and improving the life characteristics of the lithium secondary battery.

**[DETAILED DESCRIPTION OF THE INVENTION]**

**[Technical Problem]**

It is an object of the present disclosure to provide a negative electrodefor a secondary battery that is improved in the peeling resistance and adhesiveness of the active material layer to the metal current collectorand thus can improve the life characteristics of the negative electrode and the lithium secondary battery, and a method of manufacturing the same.

It is another object of the present disclosure to provide alithium secondary battery that includes the negative electrodefor the secondary battery and thus exhibits improved life characteristics.

**[Technical Solution]**

According to one embodiment of the present disclosure, there is provided a negative electrode for a secondary battery comprising:
A metal current collector; and

an active material layer formed on the metal current collector and containing a negative electrode active material, a binder, and a conductive material,

wherein when the shear strength for each cutting depth is calculated according to the following Equation 1 while cutting the active material layer at a constant cutting speed with a microblade using a SAICAS instrument,the active material layer has an average value of shear strength of 1.6 MPa or more as measured at a cutting depth of 10 to 40 $\mu$m.

[Equation 1]

$$\tau_S = \frac{F_h \cos \varphi \sin \varphi - F_v \sin^2 \varphi}{b t_0}$$

in Equation 1, $\tau$s represents the shear strength for each cutting depth,b represents the width of the microblade, torepresents the cutting depth, $\varphi$ represents the shear angle, and

Fh and Fv represent measured values of horizontal and vertical forces respectively applied to the microblade to maintain the constant cutting speed.

According to another embodiment of the present disclosure, there is provided a method of manufacturing the negative electrode for a secondary battery, the method comprising the steps of:

applying a slurry composition containing a negative electrode active material, a binder, a conductive material and a solvent onto a metal current collector; and

rolling the slurry composition over a first step and a second step,

wherein when the rolling ratio defined by the following Equation 2 is calculated, the first and second rolling are performed so that the first rolling ratio / second rolling ratio is 5 or more.

[Equation 2]

Rolling ratio (%) = [Thickness decrease ($\mu$m)of slurry composition after

rolling / Thickness ($\mu$m)of slurry composition before rolling] * 100

According to yet another embodiment of the present disclosure, there is provided a lithium secondary battery comprising the negative electrode for the secondary battery.

**[Advantageous Effects]**

According to the present disclosure, a negative electrode for a secondary battery having greatly improved peeling resistance and adhesiveness of the active material layer to the metal current collector can be manufactured and provided by a simple method of controlling the progress conditions of the rolling step during the manufacturing process of the negative electrode.

In such a negative electrode for a secondary battery, even when a lithium secondary battery is used for a long period of time, the phenomenon where the active material layer is peeled off from the metal current collector can be greatly reduced, and as a result, excellent charge/discharge cycle characteristics of the lithium secondary battery can be maintained for a long time.

Therefore, the lithium secondary battery including the negative electrode for the secondary battery exhibits greatly improved life characteristics and thus ,can be very preferably used as a power supply means such as mobile devices and electric vehicles.

**[BRIEF DESCRIPTION OF THE DRAWINGS]**

Fig. 1 is a schematic diagram showing an example of measuring shear strength for each cutting depth while cutting an active material layer with a microblade using a SAICAS instrument; and
Fig. 2 is a graph showing the result of the measurement of the shear strength of the active material layer for each cutting depth with respect to the negative electrode prepared in Comparative Examples 1 to 5 (Sample Nos: 1 and 5 to 8) and Examples 1 to 3 (Sample Nos: 2 to 4), respectively.

**[DETAILED DESCRIPTION OF THE EMBODIMENTS]**

Hereinafter, a negative electrode for a secondary battery according to an embodiment of the present disclosure, a method of manufacturing the same, and a lithium secondary battery including the same will be described in more detail with reference to the accompanying drawings.

According to one embodiment of the disclosure, there is provided a negative electrode for a secondary battery comprising:

A metal current collector; and

an active material layer formed on the metal current collector and containing a negative electrode active material, a binder, and a conductive material,
wherein when the shear strength for each cutting depth is calculated according to the following Equation 1 while cutting the active material layer at a constant cutting speed with a microblade using a SAICAS instrument, the active material layer has an average value of shear strength of 1.6 MPa or more as measured at a cutting depth of 10 to 40 $\mu$m.

[Equation 1]

$$\tau_S = \frac{F_h \cos\varphi \sin\varphi - F_v \sin^2\varphi}{bt_0}$$

in Equation 1, $\tau$s represents the shear strength for each cutting depth, b represents the width of the microblade, $t_0$ represents the cutting depth, $\varphi$ represents the shear angle, and
Fh and Fv represent measured values of horizontal and vertical forces respectively applied to the microblade to maintain the constant cutting speed.

The present inventors continued their research to improve the adhesiveness and peeling resistance of the active material layer of the negative electrode to the metal current collector by a simplified method that does not significantly change the existing negative electrode manufacturing process.

As a result of such continuous research, the present inventors have found that except for the surface portion of the active material layer containing the negative electrode active material, the binder and the conductive material, and the interface portion with the metal current collector, the shear strength against cutting measured at the central portion of the active material layer (i.e., a cutting depth of 10 to 40 $\mu$m of the active material layer) can be achieved above a certain level, thereby greatly improving the adhesiveness and peeling resistance of the active material layer to the metal current collector. This seems to be because the active material layer having high shear strength against cutting at the central portion can be closely adhered to the surface of the metal current collector with higher bonding force as the binder, the conductive material, and the negative active material are physically bonded more tightly.

In addition, based on the above findings, the present inventors continued their research about a method for manufacturing a negative electrode that enables the formation of an active material layer having a higher shear strength against cutting at the central portion. As a result of such continuous research, the present inventors have found that during the manufacturing process of the negative electrode, the rolling is performed plural times including a first step and a second step, but the rolling step is performed plural times so that the first and second rolling ratio ranges are in a certain range, whereby an active material layer having a higher shear strength and a negative electrode including the same can be prepared, and completed the present disclosure.

As described above, according to the embodiment of the present disclosure, a negative electrode for a secondary battery having greatly improved peeling resistance and adhesiveness of the active material layer to the metal current collector can be manufactured and provided by a relatively simple method. In such a negative electrode for a secondary battery, even when a lithium secondary battery is used for a long period of time, it is possible to greatly reduce the phenomenon that the active material layer is peeled off from the metal current collector, and as a result, the life characteristics of the lithium secondary battery can be greatly improved.

Now, the negative electrode for a secondary battery of one embodiment will be described in more detail.

The negative electrode for a secondary battery of one embodiment basically includes a metal current collector and an active material layer formed on the metal current collector.

As the metal current collector, any metal current collector already used before as an electrode current collector, such as a lithium secondary battery, for example, a metal current collector having conductivity without causing a chemical change in the battery can be used without particular limitation. Specific examples of the metal current collector include a current collector including at least one metal selected from the group consisting of copper, stainless steel, aluminum, nickel, and titanium. Among these metal current collectors, a copper current collector can be used in consideration of the excellent conductivity of the negative electrode for secondary batteries and excellent adhesiveness with the active material layer.

The thickness of the metal current collector is not particularly limited, but may have a thickness of 3 to 500 $\mu$m, or 5 to 100 $\mu$m, or 7 to 50 $\mu$m, which is usually applied.

Further, the active material layer may include, for example, a negative electrode active material including a graphite-based active material, a binder, and a conductive material.

Among these, specific examples of the negative electrode active material include at least one graphite-based active material selected from the group consisting of natural graphite, artificial graphite, fibrous artificial graphite, graphitized black and graphitized nanofibers, and in addition to the graphite-based active material, an additional active material such as a silicon-based active material may be further included.

Further, as the binder, various polymer binders, such as polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, styrene-butadiene rubber (SBR), or various other copolymers, etc may be used. Among them, in consideration of excellent adhesiveness to the metal current collector, and excellent dispersibility to the negative electrode active material and conductive material, a polyvinylidene fluoride-based polymer or copolymer can be preferably used.

The conductive material is not particularly limited as long as it has high conductivity without causing a chemical change in the corresponding battery, and for example, graphite such as natural graphite and artificial graphite; carbon black-based conductive materials such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives can be used.

However, when a graphite-based active material is mainly used as the negative active material, a carbon black-based conductive material can be appropriately used in consideration of its excellent dispersibility and electrical properties.

On the other hand, the active material layer may contain 80 to 98% by weight, or 85 to 98% by weight, or 90 to 97% by weight of the negative electrode active material, 0.5 to 15% by weight, or 0.7 to 10% by weight, or 1 to 5% by weight of the binder, and 0.1 to 10% by weight, or 0.2 to 5% by weight, or 0.3 to 2% by weight of the conductive material.

As the active material layer contains the negative active material, the binder and the conductive material in such a content range, uniform dispersibility of the negative electrode active material and the conductive material can be achieved, while the adhesiveness of the active material layer to the metal current collector can be further improved, and excellent electrochemical properties of the negative electrode for a secondary battery can be achieved.

On the other hand, the negative electrode for a secondary battery of one embodiment is formed by a process which include coating onto the metal current collector a slurry composition including the above-mentioned negative active material, binder and conductive material, and a solvent for dispersing them, and then rolling and drying the applied slurry composition through pluralalrolling steps described later.

By such a process, when the shear strength for each cutting depth is calculated according to the Equation 1 while cutting the active material layer at a constant cutting speed with a microblade using a SAICAS instrument, the active material layer is formed so as to have an average value of shear strength of 1.6 MPa or more, or 1.6 to 3MPa, or 1.65 to 2 MPa as measured at a cutting depth of 10 to 40 $\mu$m.

As already described above, as the active material layer is formed to have such an average shear strength for each cutting depth, the active material layer may exhibit excellent peeling resistance and adhesiveness to the metal current collector, and as a result, it was confirmed that the active material layer maintains electrochemical properties for a long period of time, so that a lithium secondary battery including the same can exhibit excellent life characteristics.

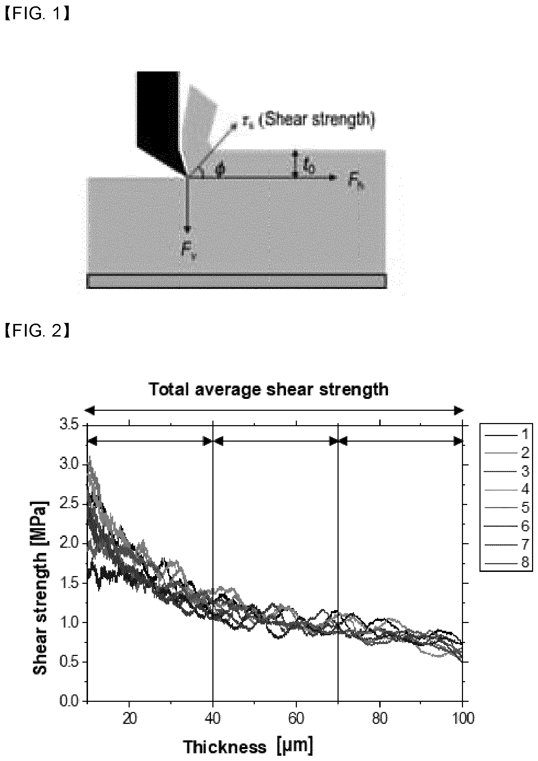

Fig. 1 is a schematic diagram showing an example of measuring shear strength for each cutting depth while cutting an active material layer with a microblade using a SAICAS instrument.

As shown in Fig. 1, for the measurement of the shear strength for each cutting depth of the active material layer, the active material layer can be cut at a constant cutting speed by giving a constant shear angle ($\varphi$) using a microblade provided in SAICAS instrument. While performing such cutting, the horizontal force (Fh) and the vertical force (Fv) applied to the microblade are respectively measured in order to maintain a constant cutting speed, and from these measurement results, the shear strength ($\tau$s) for each cutting depth can be calculated according to Equation 1.

From such a calculation result, for example, the relationship of shear strength for each cutting depth can be derived in the form shown in Fig. 2. Such measurement is repeated a plurality of times, for example, 3 to 5 times, the average shear strength for each cutting depth can be derived.

As a result of continuous experiments by the inventors, it was confirmed that in the section where the cutting depth is 10 $\mu$m or less, the reliability of the data is reduced as pressing and cutting resistance before cutting occur. In addition, as a result of continuous experiments by the inventors, it was confirmed that as the average shear strength value derived in the central portion of the active material layer, that is, in the thickness (cutting depth) section of 10 to 40 $\mu$m, is higher, the peeling resistance and adhesiveness of the active material layer to the metal current collector are most excellent.

Therefore, the negative electrode of one embodiment including the active material layer having a high average shear strength value derived in the thickness (cutting depth) section of 10 to 40 $\mu$m is excellent in adhesiveness between the metal current collector and the active material layer and in peel resistance, and thus can significantly improve the life characteristics of the lithium secondary battery. However, when the average shear strength value is too high, this indicates that the rolling step proceeds excessively, and it was confirmed that the electrochemical properties of the active material layer itself can be deteriorated, and the effect of further improving the adhesiveness is not substantially observed.

On the other hand, the detailed measurement method of the above-mentioned average shear strength is also described in "2019 Korean Society of Automotive Engineers, Gwangju Honam Branch, Spring Conference, SAICAS measurement method of polymer thin film", etc. and it can be measured using general SAICAS equipment commercially available from Daipla and others.

As described above, since the negative electrode of one embodiment includes an active material layer satisfying an average shear strength range for each predetermined cutting depth, the active material layer can exhibit excellent adhesiveness and peeling resistance to the metal current collector.

For example, the active material layer is adhered to the metal current collector with an adhesive force of 30gf/20mm to 50gf/20mm, or 31gf/20mm to 40gf/20mm, and can maintain excellent electrochemical properties for a long time and can guarantee excellent long-life characteristics of the lithium secondary battery.

The negative electrode of the above-described embodiment may be manufactured by a manufacturing method including predetermined rolling conditions. Thus, according to another embodiment of the present disclosure, there is provided a method of manufacturing the negative electrode for a secondary battery of the above-described embodiment, the method comprising the steps of:

applying a slurry composition containing a negative electrode active material, a binder, a conductive material and a solvent onto a metal current collector;and
rolling the slurry composition over a first step and a second step,
wherein when the rolling ratio defined by the following Equation 2 is calculated, the first and second rolling are performed so that the first rolling ratio / second rolling ratio is 5 or more.

[Equation 2]

$$\text{Rolling ratio (\%)} = [\text{Thickness decrease } (\mu m) \text{of slurry composition after rolling } / \text{ Thickness } (\mu m) \text{of slurry composition before rolling}] * 100$$

According to another embodiment of the present disclosure, the slurry composition for forming the active material layer is applied to the metal current collector, and then the rolling step is performed a plurality of times including a first step and a second step, wherein the rolling step are performed a plurality of times so that a ratio of the first and second rolling ratio ranges defined by Equation 2 are 5 or more, or 5 to 30 or 5 to 25, thereby forming a negative electrode for a secondary battery.

As the rolling step is performed a plurality of times under these conditions, it was confirmed that the active material layer is densified while suppressing damage to the negative electrode active material and the conductive material and maintaining excellent electrochemical properties, whereby an active material layer and a negative electrode having the average shear strength range of one embodiment and exhibiting excellent adhesiveness and peeling resistance resulting therefrom can be prepared. However, when the first and second rolling ratio ranges are too small, excellent adhesiveness due to the negative electrode of one embodiment cannot be properly achieved. Conversely, when the first and second rolling ratio ranges are excessively large, the negative electrode active material can be damaged, and the electrochemical properties of the negative electrodecan be deteriorated.

On the other hand, in the production method of the other embodiment, first, the above-mentioned negative electrode active material, the conductive material and the binder are mixed with a solvent for dispersing them to form a slurry composition. At this time, the types of the negative electrode active material, the conductive material and the binder are the same as those described above, and their content ranges are also the same as those described above for the content ranges of each component contained in the finally formed active material layer, and therefore, an additional description thereof will be omitted.

Further, as the solvent, a general solvent previously used to use the negative electrode slurry composition, for example, N-methylpyrrolidone, acetone, water, etc. may be used, and the slurry composition can be formed by mixing and stirring such a solvent so that the solid content concentration is 30 to 70% by weight, or 40 to 60% by weight.

After forming the slurry composition, the slurry composition can be applied to the negative electrode current collector by a general coating method. Such a coating method is not particularly limited, and for example, a coating method using a slot die may be applied, or other Mayer bar coating method, gravure coating method, dip coating method, spray coating method, etc., can be applied without any particular limitation.

Further, the slurry composition can be applied onto the metal current collector to a thickness of the active material layer to be finally formed, for example, in the thickness range of 50 to 400$\mu$m, or 100 to 300$\mu$m, and to a thickness of 100 to 500 $\mu$m or 150 to 400 $\mu$m, in consideration of the above-mentioned first and second rolling ratio range.

After such application step, for example, the slurry composition is subjected to a plurality of rolling steps including first and second rolling steps using a rolling apparatus such as roll press. In particular, in the manufacturing method of another embodiment, when the rolling ratio, which is defined as the ratio of the thickness decrease after the rolling step to the initial thickness before the rolling step as in Equation 2, is calculated for the first and second rolling steps, respectively, the first and second rolling steps are performed so that the first rolling ratio / second rolling ratio is 5 or more, or 5 or more, or 5 to 30 or 5 to 25.

In order to achieve these first and second rolling ratio ratios, the pressure applied to the slurry composition in the first and second rolling steps can be controlled, for example, each rolling step can be performed so that the first rolling ratio is 20 to 40%, or 22 to 35%, or 25 to 30%, and the second rolling ratio is 0.5 to 6%, or 0.7 to 5.5%, or 0.9 to 5.2%.

In order to achieve these first and second rolling ratios, for example, in the first rolling step, a pressure of 0.5 to 50 MPa, or 1 to 20 MPa can be applied to the slurry composition. Further, in consideration of the rolling ratio ranges of the first and second rolling steps, in the second rolling step, the pressure can be applied at a reduced ratio than in the first rolling step, for example, at a pressure of 1/3 or less, or 1/5 or less of the pressure applied in the first rolling step.However, the applied pressure range in each of these rolling stepscan be differently controlled in consideration of the composition of each slurry composition, characteristics of the rolling apparatus, and the like. This can be adjusted in an obvious manner to those skilled in the art.

Further, a plurality of rolling steps including the first and second rolling stepscan be performed at a temperature of 15 to 30°C.

After performing the above-mentioned rolling step, the step of drying the slurry composition to remove the solvent may be further performed, and such drying step can be performed, for example, by a general method to which an infrared drying device or the like is applied.

In the negative electrode for a secondary battery manufactured by the above method, the active material layer can exhibit excellent adhesiveness and peeling resistance to the metal current collector, and as a result, a lithium secondary battery including the same can exhibit significantly improved life characteristics.

On the other hand, according to another embodiment of the present disclosure, a lithium secondary battery including the above-mentioned negative electrode for a secondary battery is provided. Such a lithium secondary battery can be manufactured and provided by injecting a lithium salt-containing electrolyte into an electrode assembly containing a positive electrode, a negative electrode as described above, and a separator interposed therebetween.

The positive electrode can be manufactured by mixing a positive electrode active material, a conductive material, a binder and a solvent to prepare a slurry composition, and then directly coating it onto a metal current collector, or casting on a separate support and laminating the positive electrode active material film peeled from the support on a metal current collector.

The active materials used in the positive electrode may include any one active material particle selected from the group consisting of $LiCoO_2$, $LiNiO_2$, $LiMn_2O_4$, $LiCoPO_4$, $LiFePO_4$ and $LiNi_{1-x-y}Co_xM1_yM2_zO_2$ (M1 and M2 are each independently any one selected from the group consisting of Al, Ni, Co, Fe, Mn, V, Cr, Ti, W, Ta, Mg and Mo, x, y and z are, independently of each other, the atomic fractions of the elements of the oxide composition, which is $0 \leq x < 0.5$, $0 \leq y < 0.5$, $0 \leq z < 0.5$, $0 < x+y+z \leq 1$),or a mixture of two or more thereof.

On the other hand, the conductive material, the binder and the solvent may be used in the same manner as those used for the manufacture of the negative electrode.

As the separator, a conventional porous polymer film used as a separator, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer can be used alone, or these can be laminated and used. Further, an insulating thin film having high ion permeability and mechanical strength can be used.The separator may include a safety-reinforced separator (SRS) in which a ceramic material is thinly coated onto a surface of the separator. In addition, a conventional porous nonwoven fabric, for example, a nonwoven fabric made of high melting point glass fiber, polyethylene terephthalate fiber, etc. may be used, but is not limited thereto.

The electrolyte may include a lithium salt and an organic solvent for dissolving the lithium salt.

The lithium salt can be used without limitation as long as it is commonly used in electrolytes for secondary batteries. For example, as an anion of the lithium salt, one selected from the group consisting of $F^-$, $Cl^-$, $I^-$, $NO_3^-$, $N(CN)_2^-$, $BF4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ can be used.

The organic solvent contained in the electrolyte can be used without limitation as long as it is commonly used. Typically, at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gammabutyrolactone, propylene sulfite and tetrahydrofuran can be used.

In particular, among the carbonate-based organic solvents, ethylene carbonate and propylene carbonate, which are cyclic carbonates, are organic solvents with high viscosity and have a high dielectric constant and thus well dissociate lithium salts in the electrolyte, so that they can be preferably used. When such a cyclic carbonate is mixed with a low-viscosity, low-dielectric constant linear carbonate such as dimethyl carbonate and diethyl carbonate in an appropriate ratio, an electrolyte having high electrical conductivity can be produced, and thus can be used more preferably.

Optionally, the electrolyte may further include an additive such as an overcharge inhibitor included in a conventional electrolyte.

The lithium secondary battery can be manufactured by placing a separator between the positive electrode and the negative electrode to form an electrode assembly, and placing the electrode assembly in, for example, a pouch, a cylindrical battery case or a prismatic battery case, and then injecting an electrolyte.Alternatively, a lithium secondary battery can be completed by laminating the electrode assembly and then impregnating it with the electrolyte, and putting the obtained result in a battery case and sealing the case.

The lithium secondary battery may be of a stack type, a winding type, a stack and folding type, or a cable type.

The above-mentioned lithium secondary battery not only can be used in a battery cell used as a power source for small devices, but also can be preferably used as a unit cell in a medium or large-sized battery module including a plurality of battery cells. Preferred examples of the medium or large-sized devices include electric vehicles, hybrid electric vehicles,plug-in hybrid electric vehicles, power storage systems, and the like. In particular, it can be usefully used in hybrid electric vehicles and new and renewable energy storage batteries, which are areas where high output is required.

Hereinafter, preferred embodiments are presented to aid the understanding of the disclosure. However, the following examples are for illustrative purposes only, and are not intended to limit the present disclosure.

### Examples 1 to 3 (Sample Nos.: 2 to 4) and Comparative Examples 1 to 5 (Sample Nos.: 1 and 5 to 8): Manufacture of negative electrode for secondary battery

Graphite-based active material (QCG-X2; graphite), carbon black (Super C65) as a negative electrode conductive material, thickener (Daicel2200: carboxymethyl cellulose (CMC)) and binder (ADB22D; styrene butadiene rubber (SBR)-based polymer) were mixed at a ratio of 96.5:0.5:1.1:2.8 for 85 minutes, and then a solvent (water) for forming a slurry was added thereto to form a negative electrode slurry composition having a solid content of 55.5 wt%.

A copper current collector (thickness 8 $\mu$m, width 260 mm) was used as the negative electrode current collector, and the negative electrode slurry composition was coated onto one surface thereof at a loading amount of 15 mg/cm$^2$ (thickness 300 $\mu$m after coating).

The slurry composition applied onto the copper current collector in this way was subjected to the first and second rolling steps at room temperature under the conditions summarized in Table 1 below, respectively (Comparative Example 1 performed only the first rolling step).For reference, the initial coating thickness of the slurry composition, the thickness of the slurry composition after the first and second rolling steps, and each rolling ratio range calculated according to Equation 2 are shown together in Table 1 below.

After such rolling steps, mid-infrared radiation drying was performed at a rate of evaporation of 605 g/min at 50 to 100°C for 15 to 100 minutes. Thereby, negative electrodes of Examples 1 to 3 (Sample Nos: 2 to 4) and Comparative Examples 1 to 5 (Sample Nos: 1 and 5 to 8) were manufactured.

[Table 1]

|  | Sample No. | Initial thickness | Thickness after first rolling ($\mu$m) | Thickness after second rolling ($\mu$m) | First rolling ratio (%; Equation 2) | Second rolling ratio (%; Equation 2) | First rolling ratio / Second rolling ratio |
|---|---|---|---|---|---|---|---|
| Comparative Example 1 | 1 | 300 | 208 | 208 | 31 | 0 | - |
| Example 1 | 2 | 300 | 211 | 208 | 30 | 1 | 21.4 |
| Example 2 | 3 | 300 | 217 | 208 | 28 | 4 | 6.8 |
| Example 3 | 4 | 300 | 220 | 208 | 27 | 5 | 5.0 |
| Comparative Example 2 | 5 | 300 | 223 | 208 | 26 | 7 | 3.9 |
| Comparative Example 3 | 6 | 300 | 226 | 208 | 25 | 8 | 3.2 |
| Comparative Example 4 | 7 | 300 | 229 | 208 | 24 | 9 | 2.7 |
| Comparative Example 5 | 8 | 300 | 232 | 208 | 23 | 10 | 2.3 |

**Test Example 1: Derivation of shear strength and average shear strength for each cutting depth**

In the negative electrodesmanufactured in Examples and Comparative Examples, the shear strength and average shear strength for each cutting depth of the active material layer were measured and calculated by the following method.

First, a SAICAS (Daipla, Japan) equipment was used. Each negative electrode sample was placed on the sample stage of such SAICAS instrument. Then, in a state in which the microblade edge having a width of 1 mm was brought into contact with the surface of the active material layer at a relief angle of 10° and a cutting angle of 20°, the active material layer was cut while moving the microblade at constant vertical speed (0.05 $\mu$m/sec) and horizontal speed (0.5 $\mu$m/sec). At this time, the definitions of margin angle and cutting angle are known through "2019 Korea Society of Automotive Engineers, Gwangju Honam Branch, Spring Conference, SAICAS Measurement Method of Polymer Thin Film", etc. and the shear angle during the cutting step can be calculated from the margin angle and the cutting angle, as known through the above literature.

In order to maintain the horizontal and vertical speed for cutting constant while proceeding with such cutting, the vertical force (FV) and horizontal force (FH) applied to the microblade were measured, respectively.

From the measurement results of these vertical force and the horizontal force, the shear strength for each cutting depth was calculated according to Equation 1 below.

[Equation 1]

$$\tau_S = \frac{F_h \cos \varphi \sin \varphi - F_v \sin^2 \varphi}{bt_0}$$

in Equation 1, $\tau$s represents the shear strength for each cutting depth,b represents the width of the microblade, torepresents the cutting depth, $\varphi$ represents the shear angle, and
Fh and Fv represent measured values of horizontal and vertical forces respectively applied to the microblade to maintain the constant cutting speed.

The measurement and calculation of the shear strength for each cutting depth were repeated 3 times for each sample, and these calculation results are shown in Fig. 2 .For reference, in Fig. 2, the negative electrode of eachExample and Comparative Example is summarized with the sample numbers of Tables 1 and 2.

From the calculation result of the shear strength for each cutting depth, except for the depth of cut (thickness) region, which has poor correlation between quantitative data and adhesiveness of the active material layer,the average value of the measured and calculated shear strength for a cutting depth of 10 to 40 $\mu$m was taken, and the average value of the shear strength of the active material layer for each Example and Comparative Example was calculated and summarized in Table 2 below.

[Table 2]

| | Sample No. | First rolling ratio / Second rolling ratio | Average value of shear strength (cutting depth of 10 ~ 40 $\mu$m; MPa) |
|---|---|---|---|
| Comparative Example 1 | 1 | - | 1.59 |
| Example 1 | 2 | 21.4 | 1.81 |
| Example 2 | 3 | 6.8 | 1.80 |
| Example 3 | 4 | 5.0 | 1.69 |
| Comparative Example 2 | 5 | 3.9 | 1.44 |
| Comparative Example 3 | 6 | 3.2 | 1.55 |
| Comparative Example 4 | 7 | 2.7 | 1.57 |
| Comparative Example 5 | 8 | 2.3 | 1.52 |

Referring to Table 2, it was confirmed that the first rolling ratio / second rolling ratio range is 5 or more, or 5 to 30, and the average value of the shear strength of 1.6 MPa or more is finally achieved in Examples 1 to 3 in which the first and second rolling steps have been performed.

**Test Example 2: Measurement of the adhesive force of the active material layer**

In the negative electrodes manufactured in Examples and Comparative Examples, the adhesive force between the active material layer and the metal current collector was measured by the following method.

First, each negative electrode sample was cut into a predetermined size (20 mm x 100 mm) and fixed on a slide glass, and then 180° adhesive force to the negative electrode active material layer from the copper current collector was measured.- The adhesive force of each sample was measured three times, and the average value was calculated.The adhesive force thus calculated is summarized in Table 3 below.

[Table 3]

| | Sample No. | Average value of shear strength (cutting depth of 10 ~ 40 $\mu$m; MPa) | Adhesive force [gf/ 20mm] |
|---|---|---|---|
| Comparative Example 1 | 1 | 1.59 | 29.1 |
| Example 1 | 2 | 1.81 | 32.1 |
| Example 2 | 3 | 1.8 | 32.1 |
| Example 3 | 4 | 1.69 | 31.7 |
| Comparative Example 2 | 5 | 1.44 | 28.8 |
| Comparative Example 3 | 6 | 1.55 | 27.6 |
| Comparative Example 4 | 7 | 1.57 | 28.3 |
| Comparative Example 5 | 8 | 1.52 | 28.5 |

Referring to Table 3, it was confirmed that the active material layers of Examples exhibit excellent adhesiveness to the copper current collector as compared with Comparative Examples. Thereby, it is considered that while increasing the fracture resistance and mechanical durability of the active material layer due to external force, the external force transmission to the active material layer/metal current collector interface is reduced, and the peeling resistance of the active material layer is increased.

**Claims**

1. A negative electrode for a secondary battery comprising:

   A metal current collector; and

   an active material layer formed on the metal current collector and containing a negative electrode active material, a binder, and a conductive material,
   wherein when the shear strength for each cutting depth is calculated according to the following Equation 1 while cutting the active material layer at a constant cutting speed with a microblade using a SAICAS instrument, the active material layer has an average value of shear strength of 1.6 MPa or more as measured at a cutting depth of 10 to 40 $\mu$m,

   [Equation 1]

   $$\tau_S = \frac{F_h \cos\varphi \sin\varphi - F_v \sin^2\varphi}{bt_0}$$

   in Equation 1, $\tau_S$ represents the shear strength for each cutting depth, b represents the width of the microblade, to represents the cutting depth, $\varphi$ represents the shear angle, and
   Fh and Fv represent measured values of horizontal and vertical forces respectively applied to the microblade to maintain the constant cutting speed.

2. The negative electrode for a secondary battery according to claim 1, wherein the negative electrode active material comprises at least one graphite-based active material selected from the group consisting of natural graphite, artificial graphite, fibrous artificial graphite, graphitized black, and graphitized nanofibers.

3. The negative electrode for a secondary battery according to claim 1, wherein the conductive material comprises at least one selected from the group consisting of carbon black, acetylene black, ketjen black, channel black, furnace black, lamp black, and thermal black.

4. The negative electrode for a secondary battery according to claim 1, wherein the binder comprises at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid and styrene-butadiene rubber (SBR).

5. The negative electrode for a secondary battery according to claim 1, wherein the active material layer contains 80 to 98% by weight of the negative electrode active material, 0.5 to 15% by weight of the binder, and 0.1 to 10% by weight of the conductive material.

6. The negative electrode for a secondary battery according to claim 1, wherein the active material layer has a thickness of 50 to 400 $\mu$m.

7. The negative electrode for a secondary battery according to claim 1, wherein the metal current collector comprises at least one selected from the group consisting of copper, stainless steel, aluminum, nickel and titanium.

8. A method of manufacturing the negative electrode for a secondary battery as set forth in claim 1, the method comprising the steps of:

   applying a slurry composition containing a negative electrode active material, a binder, a conductive material and a solvent onto a metal current collector; and

rolling the slurry composition over a first step and a second step,

wherein when the rolling ratio defined by the following Equation 2 is calculated, the first and second rolling are performed so that the first rolling ratio / second rolling ratio is 5 or more,

[Equation 2]

Rolling ratio (%) = [Thickness decrease ($\mu$m) of slurry composition after rolling / Thickness ($\mu$m) of slurry composition before rolling] * 100

9.  The method of manufacturing the negative electrode for a secondary battery according to claim 8, wherein the first rolling ratio is 20 to 40%, and the second rolling ratio is 0.5 to 6%.

10. The method of manufacturing the negative electrode for a secondary battery according to claim 8, wherein the slurry composition is applied onto a metal current collector to a thickness of 100 to 500 $\mu$m.

11. The method of manufacturing the negative electrode for a secondary battery according to claim 8, wherein after the first and second rolling steps, the method further comprises drying the slurry composition to remove a solvent.

12. A lithium secondary battery comprising:

a positive electrode;

the negative electrode as set forth in claim 1; and

a separator interposed between the positive electrode and the negative electrode.

【FIG. 1】

【FIG. 2】

## INTERNATIONAL SEARCH REPORT

| International application No. |
| --- |
| **PCT/KR2022/002474** |

| A. | CLASSIFICATION OF SUBJECT MATTER |
| --- | --- |

**H01M 4/133**(2010.01)i; **H01M 4/04**(2006.01)i; **H01M 4/1393**(2010.01)i; **H01M 10/0525**(2010.01)i; **H01M 4/62**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/133(2010.01); H01M 10/0525(2010.01); H01M 10/0587(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 음극 (Cathode), SAICAS (Surface And Interfacial Characterizing Analysis System), 전단 강도 (shear strength), 절삭 (cutting)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | SON, B. et al. Measurement and analysis of adhesion property of lithium-ion battery electrodes with SAICAS. ACS applied materials & interfaces. 2014, vol. 6, pp. 526-531.<br>See abstract; page 527, left column; and page 528, left column; page 529, tables 2-3, and figure 5. | 1-12 |
| A | CHANG, W. J. et al. Direct observation of carboxymethyl cellulose and styrene–butadiene rubber binder distribution in practical graphite anodes for Li-ion batteries. ACS applied materials & interfaces. 2019, vol. 11, pp. 41330-41337.<br>See entire document. | 1-12 |
| A | KR 10-2018-0035693 A (LG CHEM, LTD.) 06 April 2018 (2018-04-06)<br>See entire document. | 1-12 |
| A | JP 2013-109853 A (TOYOTA MOTOR CORP.) 06 June 2013 (2013-06-06)<br>See entire document. | 1-12 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 June 2022** | **02 June 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2022/002474** |

**C.    DOCUMENTS CONSIDERED TO BE RELEVANT**

| Category* | Citation of document, with indication, where appropriate, of the relevant passages | Relevant to claim No. |
| --- | --- | --- |
| A | 변승우 등. SAICAS 를 이용한 리튬이차전지용 복합전극 결착특성 분석. 전기화학회지. 2018, vol. 21, no. 2, pp. 28-38 (BYUN, Seoungwoo et al. Analysis on Adhesion Properties of Composite Electrodes for Lithium Secondary Batteries using SAICAS. Journal of the Korean Electrochemical Society.)<br>        See entire document. | 1-12 |

Form PCT/ISA/210 (second sheet) (July 2019)

**INTERNATIONAL SEARCH REPORT**
Information on patent family members

International application No.

**PCT/KR2022/002474**

| Patent document cited in search report | | | Publication date (day/month/year) | Patent family member(s) | | | Publication date (day/month/year) |
|---|---|---|---|---|---|---|---|
| KR | 10-2018-0035693 | A | 06 April 2018 | CN | 108701816 | A | 23 October 2018 |
| | | | | CN | 108701816 | B | 12 November 2021 |
| | | | | EP | 3396745 | A2 | 31 October 2018 |
| | | | | KR | 10-1966144 | B1 | 05 April 2019 |
| | | | | US | 2019-0305308 | A1 | 03 October 2019 |
| | | | | WO | 2018-062836 | A2 | 05 April 2018 |
| | | | | WO | 2018-062836 | A3 | 14 June 2018 |
| JP | 2013-109853 | A | 06 June 2013 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210026804